# EUROPÄISCHE PATENTANMELDUNG

(11) **EP 1 091 554 A2**
(43) Veröffentlichungstag der Anmeldung: **11.04.2001**
(21) Anmeldenummer: 00440261.6
(22) Anmeldetag: 29.09.2000
(51) Int. Cl.: H04M 7/00

(54) **Verfahren zur Unterstützung des Aufbaus von Fernsprechverbindungen mittels Voice-over-IP**

(30) Priorität: 08.10.1999 DE 19948433
(71) Anmelder: ALCATEL, 75008 Paris (FR)
(72) Erfinder: Stahl, Uwe, 71229 Leonberg (DE); Lautenschlager, Wolfgang, 71287 Weissach-Flacht (DE); Krank, Lothar, 71254 Ditzingen (DE); Weik, Hartmut, 70195 Stuttgart (DE)
(74) Vertreter: Zinsinger, Norbert

(57) **Zusammenfassung**

Die Erfindung betrifft ein Verfahren, einen Server und ein Computerprodukt zur Unterstützung des Aufbaus von Fernsprechverbindungen zwischen Fernsprechendgeräten (TE1, TE2) eines Fernsprechnetzes (TELENET) und IP Endgeräten (TE3, TE4) eines IP Netzes (IPNET). Zwei oder mehr VOIP Dienstbetreibern (OP1 bis OP3) ist eine Untermenge von Fernsprechrufnummern des Fernsprechnetzes (TELENET) zugeordnet. Die VOIP Dienstbetreiber ordnen wiederum Fernsprechrufnummern aus der Untermenge von Fernsprechrufnummern IP Endgeräten (TE3, TE4) zu. Für die Wegeleitung einer Fernsprechverbindung durch das Fernsprechnetz (TELENET), die von einem Fernsprechendgeräte (TE1, TE2) des Fernsprechnetzes an eine Fernsprechrufnummer aus der Untermenge von Fernsprechnummern adressiert ist, wird der Server (SERV) kontaktiert. Der Server (SERV) ermittelt aus der gerufenen Fernsprechrufnummer solch einer speziellen Fernsprechverbindung, welchem VOIP Dienstbetreiber das durch die gerufene Fernsprechrufnummer adressierte IP Endgerät zugeordnet ist. Der Server (SERV) veranlaßt sodann eine Wegeleitung der speziellen Fernsprechverbindung durch das Fernsprechnetz (TELENET) zu einem dem ermittelten VOIP Dienstbetreiber zugeordneten VOIP Gateway (GW1 bis GW5).

## Beschreibung

Die Erfindung betrifft ein Verfahren zur Unterstützung des Aufbaus von Fernsprechverbindungen zwischen Fernsprechendgeräten eines Fernsprechnetzes und IP Endgeräten nach dem Oberbegriff von Anspruch 1, einen Server zur Unterstützung des Aufbaus von solchen Fernsprechverbindungen nach dem Oberbegriff von Anspruch 7 und ein Computer Produkt zur Unterstützung des Aufbaus von solchen Fernsprechverbindungen nach dem Oberbegriff von Anspruch 12.

Die Erfindung geht von dem Aufbau von Fernsprechverbindungen über IP Netze aus, wie sie beispielsweise in der ITU-T Spezifikation H.323, 2/1998, auf den Seiten 1 bis 2 und Seiten 12 bis 34 geschildert ist.

Ein H.323 Gateway bildet ein Interface zwischen einem IP Netz und einem Fernsprechnetz. Das Gateway kodiert, komprimiert und paketiert von dem Fernsprechnetz stammende Sprach- und Videosignale und transportiert sie anschließend in IP Paketen zu einem Endgerät des IP Netzes oder zu einem anderen H.323 Gateway und umgekehrt. Damit wird es ermöglicht, eine Fernsprechverbindung, die von einem üblichen Fernsprechendgerät eines Fernsprechnetzes aus aufgebaut wird, über ein IP Netz zu führen.

Üblicherweise wird hierbei eine solche Fernsprechverbindung wie folgt aufgebaut: Der Teilnehmer wählt eine spezielle Rufnummer, die dem H.323 Gateway im Fernsprechnetz zugeordnet ist. Diese Rufnummer stellt somit für den Teilnehmer die Rufnummer eines VOIP Service Providers (VOIP = Voice over IP) dar. Das H.323 Gateway erfrägt sodann mittels Sprachansage die Eingabe der Adresse des zu rufenden IP Endgerätes. Mittels dieser Adresse initiiert das H.323 Gateway sodann den Aufbau einer entsprechen Verbindung durch das IP Netz.

Der Erfindung liegt nun die Aufgabe zugrunde, den Aufbau einer Fernsprechverbindung zu beschleunigen, die teilweise über ein IP Netz geführt wird.

Diese Aufgabe wird gelöst durch ein Verfahren zur Unterstützung des Aufbaus von Fernsprechverbindungen zwischen Fernsprechendgeräten eines Fernsprechnetzes und IP Endgeräten nach der Lehre von Anspruch 1, einen Server zur Unterstützung des Aufbaus von solchen Fernsprechverbindungen nach der Lehre von Anspruch 7 und ein Computer Produkt zur Unterstützung des Aufbaus von solchen Fernsprechverbindungen nach der Lehre von Anspruch 12.

Der Erfindung liegt hierbei der Gedanke zugrunde, VOIP Dienstbetreibern (VOIP = Voice over IP) eine Untermenge von Fernsprechrufnummern eines Fernsprechnetzes zuzuordnen, die diese wiederum eigenverantwortlich IP Endgeräten als weitere Adresse neben deren IP Adresse zuordnen können. Mit Fernsprechrufnummern aus dieser Untermenge von Fernsprechrufnummern werden IP Endgeräte für VOIP Fernsprechverbindungen nun innerhalb des Fernsprechnetzes eindeutig adressierbar. Wird beim Verbindungsaufbau in dem Fernsprechnetz erkannt, daß eine Fernsprechverbindung eine Fernsprechrufnummer aus diese Untermenge als Zielrufnummer enthält, so wird ein Server getriggert. Dieser Server sorgt dafür, daß die Wegeleitung einer solchen VOIP Fernsprechverbindung im Fernsprechnetz entsprechend der augenblicklichen, von den VOIP Dienstbetreibern festgelegten Zuordnung von Fernsprechrufnummern zu IP Endgeräte Adressen übereinstimmt. Weiter ist es auch vorteilhaft, eine Portierung von Fernsprechrufnummern zwischen Fernsprechrufnummern aus der für IP Endgeräten reservierten Untermenge von Fernsprechrufnummer und Fernsprechrufnummern aus dem übrigen Rufnummernraum zuzulassen. Auch für solche portierten Fernsprechrufnummern ist dann der Server zu triggern.

Der Vorteil der Erfindung besteht darin, daß der bisher zweistufige Verbindungsaufbau durch einen einstufigen Verbindungsaufbau mit nur einer Adresse ersetzt wird und damit der Verbindungsaufbau insgesamt beschleunigt wird und benutzerfreundlicher wird.

Weitere Vorteile bestehen darin, daß es durch die Erfindung ermöglicht wird, Rufnummernportabilität zwischen von verschiedenen VOIP Dienstbetreibern vergebenen Fernsprechrufnummern für IP Endgeräte zu ermöglichen. Auch die Ermöglichung von Rufnummernportabilität zwischen VOIP Netzbetreibern und beliebigen Fest- oder Mobilfunknetzbetreibern ist möglich. Dadurch wird zum einen die Vergabe von Fernsprechrufnummern durch die einzelnen VOIP Dienstbetreiber entkoppelt und zum anderen den IP Teilnehmern der Wechsel von einem zu einem anderen VOIP Dienstbetreiber erleichtert. Dies führt zu einer Verbesserung der Wettbewerbsbedingungen zwischen VOIP Dienstbetreibern.

Weitere Vorteile der Erfindung bestehen darin, daß die Wegeleitung einer VOIP Fernsprechverbindung sowohl innerhalb des Fernsprechnetzes als auch innerhalb des IP Netzes verbessert wird.

Die Erfindung läßt sich weiter mit geringem Aufwand in bestehende Systeme implementieren. Weiter wird durch die Erfindung die Anzahl der für die Adressübersetzung einer VOIP Fernsprechverbindung notwendige Zahl von Datenbankzugriffen optimiert.

Vorteilhafte Ausgestaltungen der Erfindung sind den Unteransprüchen zu entnehmen.

Im folgenden wir die Erfindung anhand mehrerer Ausführungsbeispiele unter Zuhilfenahme beiliegender Zeichnungen beispielhaft erläutert.
- Fig. 1: zeigt ein Blockschaltbild einer Kommunikationsumgebung mit einem erfindungsgemäßen Server.
- Fig. 2: zeigt eine funktionelle Darstellung eines Ausschnitts aus der Kommunikationsumgebung nach Fig. 1 für ein erstes Ausführungsbeispiel.
- Fig. 3: zeigt eine funktionelle Darstellung eines Ausschnitts aus der Kommunikationsumgebung nach Fig. 1 für ein zweites Ausführungsbeispiel.
- Fig. 4: zeigt eine funktionelle Darstellung eines Ausschnitts aus der Kommunikationsumgebung nach Fig. 1 für ein drittes Ausführungsbeispiel.

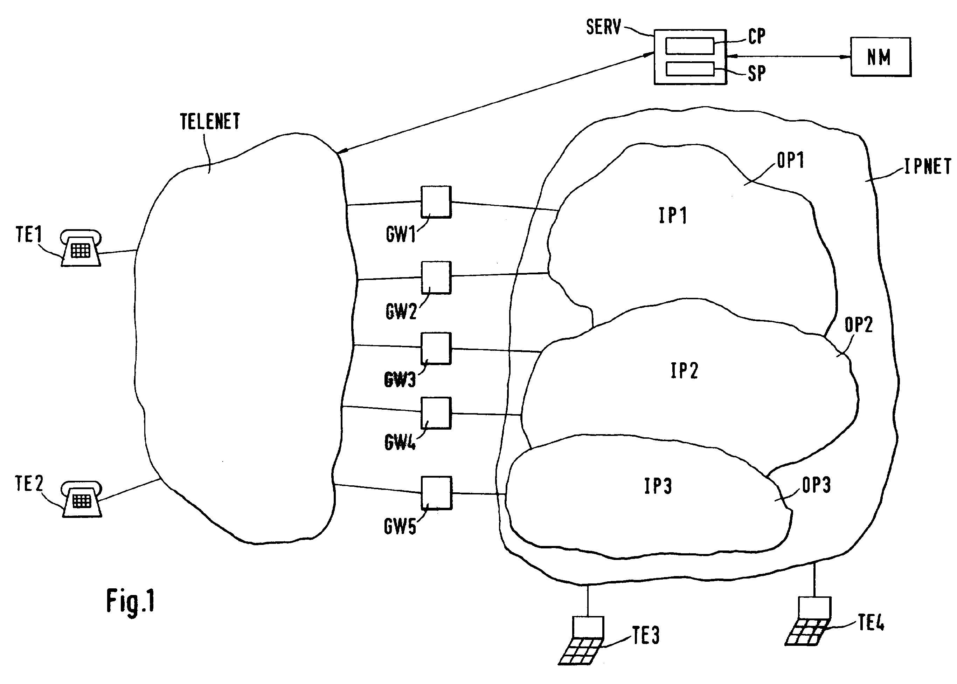

Fig. 1 zeigt ein Kommunikationssystem mit zwei Kommunikationsnetzen TELENET und IPNET, mit vier Endgeräten TE1 bis TE4, mit einem Server SERV, mit einer Managementeinheit NM und mit fünf VOIP Gateways GW1 bis GW5. Die VOIP Gateways GW1 bis GW5 sind zum einen mit dem Kommunikationsnetz TELENET und zum anderen mit dem Kommunikationsnetz IPNET verbunden und verbinden somit die Kommunikationsnetze TELENET und IPNET. Die Endgeräten TE1 und TE2 sind mit dem Kommunikationsnetz TELENET und die Endgeräte TE3 und TE4 mit dem Kommunikationsnetz IPNET verbunden. Der Server SERV tauscht mit dem Kommunikationsnetz TELENET und mit der Managementeinheit NM Daten aus.

Bei dem Kommunikationsnetz TELENET handelt es sich um ein Fernsprechnetze, beispielsweise um ein ISDN-Netze (ISDN = Integrated Digital Network) oder um ein PSTN-Netze (PSTN = Public Switched Telephone Network). Es ist hierbei auch möglich, daß das Kommunikationsnetz TELENET von mehreren Teilnetzen gebildet werden, die auch unterschiedlichen Netzbetreibern zugeordnet sein können. Weiter können solche Teilnetze auch Mobilfunknetze, beispielsweise nach dem GNM Standard (GNM = Global System for Mobile Communication) sein. Endgeräte können mit dem Kommunikationsnetz TELENET somit beispielsweise über einen analogen PSTN Anschluß, einen ISDN Anschluß oder eine Luftschnittstelle nach dem GNM oder DECT Standard (DECT = Digital European Cordless Telecommunication) verbunden sein.

Bei den Endgeräten TE1 und TE2 handelt es sich um Fernsprechendgeräte, beispielsweise um ein ISDN-Telefon oder um ein Mobilfunk-Telefon.

Bei dem Kommunikationsnetz IPNET handelt es sich um ein IP Netz (IP = Internet Protokoll). Es wird von einem Datennetz gebildet, das als Layer 3 Schicht ein IP Protokoll verwendet (IP = Internet Protokoll). Beispiele für solch ein IP Protokoll sind die IPv4 oder IPv6 Protokolle.

Das Kommunikationsnetz IPNET weist mehrere Teilnetze auf, von denen in Fig. 1 beispielhaft drei Teilnetze IP1 bis IP3 gezeigt sind. Bei den Teilnetzen IP1 bis IP3 handelt es sich jeweils um die logischen Teilnetze eines IP Dienstbetreibers (IP = Internet Protokoll). Die IP Dienstbetreiber stellen den ihnen zugeordneten Teilnehmer den Zugang zum Kommunikationsnetz IPNET bereit. Weiter stellen sie allen oder einem Teil der ihnen zugeordneten Teilnehmer einen VOIP Dienst zur Verfügung und treten somit zusätzlich als VOIP Dienstbetreiber OP1, OP2 bzw. OP3 auf.

Es ist natürlich auch möglich, daß die VOIP Dienstbetreiber OP1, OP2 und OP3 nicht zugleich IP Dienstbetreiber sind und somit beliebigen Teilnehmern des Kommunikationsnetzes IPNET VOIP Dienste zur Verfügung stellt.

Bei den Endgeräten TE3 und TE4 handelt es sich jeweils um IP Endgeräte, z. B. um ein internetfähiges Telefon oder um einen Computer, der mit einer Schnittstellenkarte zur Kommunikation über das Kommunikationsnetz IPNET ausgestattet ist. Die Endgeräten TE3 und TE4 sind weiter mit einer VOIP Software ausgestattet, die es dessen Benutzer ermöglicht, eine Fernsprechkommunikation über das Kommunikationsnetz IPNET zu führen.

Die Anzahl der VOIP Gateways GW1 bis GW5 ist beispielhaft gewählt. Bei den VOIP Gateways GW1 bis GW5 handelt es sich um Gateways, die den Aufbau einer Fernsprechverbindung durch das Kommunikationsnetz IPNET ermöglichen. Sie führen hierzu selbständig eine Adressübersetzung in eine IP Adresse, die Codierung/ Decodierung sowie die Paketierung/Depaketierung des Datenstroms für den Transport durch das Kommunikationsnetz IPNET, und weitere Funktionen wie Echo Cancellation durch. Weiter steuern sie den Verbindungsaufbau durch das Kommunikationsnetz IPNET.

Die VOIP Gateways GW1 bis GW5 können beispielsweise gemäß der ITU-T Empfehlung H.323 realisiert sein . Zur Erbringung ihrer Funktion könnten sie zusätzlich auf einen Gatekeepers zugreifen, der die Adressübersetzungsfunktion zentral für mehrere der VOIP Gateways GW1 bis GW5 erbringt. Der Gatekeeper kann beispielsweise ebenfalls gemäß der ITU-T Empfehlung H.323 realisiert sein .

Die VOIP Gateways GW1 bis GW5 sind jeweils einem der VOIP Dienstbetreiber OP1, OP2 bzw. OP3 zugeordnet. Die VOIP Gateways GW1 und GW2 sind dem VOIP Dienstbetreiber OP1, die VOIP Gateways GW3 und GW4 sind dem VOIP Dienstbetreiber OP2 und das VOIP Gateway GW5 ist dem VOIP Dienstbetreiber OP3 zugeordnet. Die VOIP Gateways GW1 bis GW5 werden vorzugsweise über das Teilnetz desjenigen VOIP Dienstbetreibers adressiert, dem sie zugeordnet sind. Weiter werden sie vorzugsweise von dem VOIP Dienstbetreiber betrieben, dem sie zugeordnet sind. Es ist aber auch möglich, daß die VOIP Gateways GW1 bis GW5 von einem anderen Dienst- oder Netzbetreiber betrieben werden.

Innerhalb des Kommunikationsnetzes TELENET ist den VOIP Gateways GW1 bis GW5 jeweils ein Bereich von Fernsprechrufnummern des Kommunikationsnetzes TELENET zugeordnet. Rufe durch das Kommunikationsnetz TELENET, die an eine Fernsprechrufnummer aus einem solchen Bereich von Fernsprechrufnummern gerichtet ist, werden somit automatisch durch das Kommunikationsnetz TELENET an das jeweilige VOIP Gateway der VOIP Gateways GW1 bis GW5 geleitet, dem dieser Bereich von Fernsprechrufnummern zugeordnet ist.

Es ist hierbei vorteilhaft, wenn zwei VOIP Gateways aus verschiedenen Netzbereichen des Kommunikationsnetzes TELENET mittels Beeinflussung der Wegeleitung im Kommunikationsnetz TELENET (z. B. durch Rufnummernumwertung) durch den Servers SERV oder einen IN Dienste des Kommunikationsnetzes TELENET derselbe Bereich von Fernsprechrufnummern zugeordnet ist. Diese Reduziert die Last und verkürzt die Weglänge der VOIP Fernsprechverbindungen.

Die Managementeinheit NM dient den VOIP Dienstbetreibern OP1 bis OP3 zur Rufnummernverwaltung von Fernsprechrufnummern, die IP Endgeräten zugeordnet sind.

Den VOIP Dienstbetreibern OP1 bis OP3 wird innerhalb des in dem Kommunikationsnetzes TELENET zur Verfügung stehenden Rufnummernraums eine Untermenge von Fernsprechrufnummern des Kommunikationsnetzes TELENET zugeordnet. Die VOIP Dienstbetreiber OP1 bis OP3 ordnen wiederum mittels der Managementeinheit NM Fernsprechrufnummern aus der Untermenge von Fernsprechrufnummern IP Endgeräten zu. Diese IP Endgerät, beispielsweise die Endgeräte TE3 und TE4, sind damit zusätzlich zu der jeweiligen, dem jeweiligen IP Endgerät zugeordneten IP-Adresse mittels dieser jeweiligen zugeordneten Fernsprechrufnummer adressierbar.

Es ist weiter möglich, daß auch einer Fernsprechrufnummer aus einem Teil des Rufnummernraums, der nicht der Untermenge von Fernsprechrufnummern zugeordnet ist, einem IP Endgerät zugeordnet ist und dieses IP Endgerät dann zusätzlich zu der jeweiligen zugeordneten IP-Adresse mittels dieser jeweiligen zugeordneten Fernsprechrufnummer adressierbar ist. Eine Portierung von Fernsprechrufnummern in die Untermenge von IP Endgeräten zugeordneten Fernsprechrufnummer ist somit möglich.

Der Server SERV führt folgende Funktionen aus:

Wird der Server SERV von einer Komponente des Kommunikationsnetzes TELENET kontaktiert, die den Aufbau einer Fernsprechverbindung durch das Fernsprechnetz erkennt, die an eine Fernsprechrufnummer aus der oben definierten Untermenge von Fernsprechnummern gerichtet ist, so wird der Server SERV für diese spezielle Fernsprechverbindung getriggert. Es ist auch möglich, daß der Server zusätzlich für solche Fernsprechverbindungen getriggert wird, die an eine Fernsprechrufnummer gerichtet sind, deren zugeordnetes Endgerät zu einem VOIP Dienstbetreiber portiert ist.

Wenn der Server SERV für eine spezielle Fernsprechverbindung getriggert ist, so ermittelt er aus der gerufenen Fernsprechrufnummer der speziellen Fernsprechverbindung, welchem VOIP Dienstbetreiber das durch die gerufene Fernsprechrufnummer adressierte IP Endgerät zugeordnet ist und veranlaßt eine Wegeleitung der speziellen Fernsprechverbindung durch das Kommunikationsnetz TELENET zu einem dem ermittelten VOIP Dienstbetreiber zugeordneten VOIP Gateway.

Der Server SERV wird hierbei von einem oder mehreren miteinander verbundenen Rechnern gebildet, auf denen eine beispielsweise aus einem Betriebssystem und einem Datenbanksystem bestehende Software-Plattform aufsetzt. Software-Plattform und Rechner bilden zusammen einen Computer SP. In Verbindung mit einem Computerprodukt CP führt der Computer SP die oben beschriebenen Funktionen des Servers SERV aus.

Das Computerprodukt CP wird von einem Datenträger und von einem auf diesem Datenträger abgespeicherten Computerprogramm gebildet. Läuft dieses Computerprogramm auf dem Computer SP ab, dann führt der Server SERV die oben beschriebenen Funktionen aus. Der Server SERV wird so von dem Computer CP und diesem Computerprogramm gebildet. Das Computerprodukt CP kann auch allein von diesem Computerprogramm als solchem gebildet werden.

Es ist auch möglich, daß auf dem Computer SP weitere Applikationsprogramme ablaufen, die Dienstmanagementfunktionen oder Dienststeuerfunktionen bereitstellen.

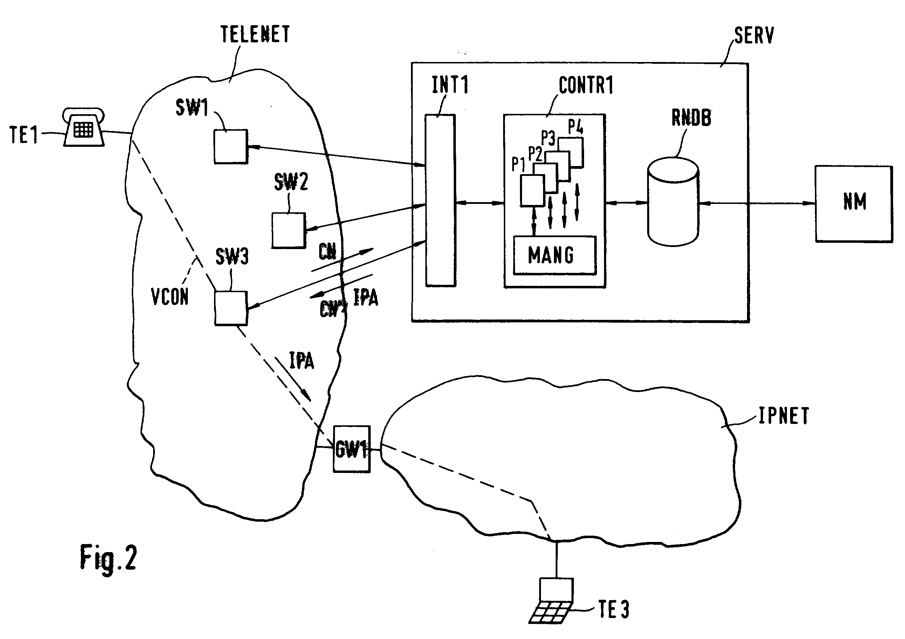

Im folgenden wird der detaillierte Aufbau des Servers SERV und der Ablauf des erfindungsgemäßen Verfahrens anhand von Fig. 2 erläutert.

Fig. 2 zeigt die Kommunikationsnetze TELENET und IPNET, den Server SERV, die Managementeinheit NM, das VOIP Gateway GW1 und die Endgeräte TE1 und TE3.

Das Kommunikationsnetz TELENET weist ein oder mehrere besonders ausgestaltete Komponenten auf, von denen in Fig. 2 beispielhaft drei Komponenten SW1 bis SW3 gezeigt sind. Diese Komponenten kontaktierten den Server SERV, wenn sie den Aufbau einer Fernsprechverbindung VCON durch das Kommunikationsnetz TELENET erkennt, die an eine Fernsprechrufnummer aus der oben beschriebenen Untermenge von Fernsprechnummern des Kommunikationsnetz TELENET gerichtet ist.

Die Fernsprechrufnummern dieser Untermenge sind den VOIP Dienstbetreibern OP1 bis OP3 hierbei derart zur Zuordnung zu IP Endgeräten zugeordnet, daß das jeweilige IP Endgerät zusätzlich zu einer diesem IP Endgerät zugeordneten IP-Adresse mittels dieser zugeordneten Fernsprechrufnummer adressierbar ist. Den durch die Untermenge von Fernsprechrufnummern im Rufnummernraum des Kommunikationsnetzes TELENET belegten Fernsprechrufnummern ist hierbei jeweils ein VOIP Gateway oder mehrere VOIP Gateways der VOIP Gateways GW1 bis GW5 zugeordnet. Alle Rufe, die an eine Fernsprechrufnummer aus der Untermenge von Fernsprechrufnummern gerichtet sind, adressieren somit innerhalb des Kommunikationsnetzes TELENET ein VOIP Gateway oder mehrere VOIP Gateways.

Bei den Komponenten SW1 bis SW3 handelt es sich hierbei vorzugsweise um Dienstvermittlungsstellen (SSP = Service Switching Point) nach der IN Architektur (IN = Intelligent Network), die eine Anforderungsnachricht an den Server SERV senden, wenn die in einem Ruf durch das Kommunikationsnetz TELENET eingetragene gerufene Fernsprechrufnummer eine Fernsprechrufnummer aus der oben beschriebenen Untermenge von Fernsprechrufnummern ist.

Es ist jedoch auch möglich, daß die Komponenten SW1 bis SW3 den Server SERV für jede Fernsprechverbindung kontaktieren, die über sie geleitet wird. Aus der gerufenen Rufnummer der jeweiligen Fernsprechverbindung ermittelt sodann der Server SERV eigenständig, ober er für die jeweilige Fernsprechverbindung zu triggern ist oder nicht.

Bei den Komponenten SW1 bis SW3 kann es sich auch beispielsweise um Dienststeuereinheit (SCP = Service Control Point) nach der IN Architektur (IN = Intelligent Network) handeln, die beim Auftreten eines solchen Ereignisses eine Anforderungsnachricht an den Server SERV senden. Die Bestimmung dieses Ereignisses kann hierbei durch die Dienststeuereinheit selbst erfolgen, wenn diese beispielsweise für alle Rufe getriggert wird. Die Dienststeuereinheit kann aber auch nur eine Mittlerrolle zwischen Dienstvermittlungsstellen und Server SERV wahrnehmen.

Aus funktioneller Sicht weist der Server SERV eine Schnittstelleneinheit INT1, eine Steuereinheit CONTR1 und eine Datenbank RNDB auf.

Die Schnittstelleneinheit INT1 dient der Kommunikation mit den Komponenten SW1 bis SW3 des Kommunikationsnetzes TELENET. Sie stellt hierzu insbesondere Funktionen zur Bearbeitung der für diese Kommunikation notwendigen Protokollstack zur Verfügung.

Die Kommunikation erfolgt vorzugsweise über das Signalisierungssystem des Kommunikationsnetzes TELENET. Die Schnittstelleneinheit INT1 umfaßt somit Funktionen zur Bearbeitung des Protokollstacks des Nr. 7 Signalisierungssystems und des INAP-Protokolls (INAP = Intelligent Network Application Part).

Es ist jedoch auch möglich, daß das INAP-Protokoll zwischen den Komponenten SW1 bis SW3 und dem Server SERV über einen IP Protokollstack (IP = Internet Protocol) transportiert wird. Auch eine Kommunikation zwischen den Komponenten SW1 bis SW3 und dem Server SERV, die über einen Software-Bus erfolgt, beispielsweise gemäß der CORBA Architektur (CORBA = Common Object Request Broker), und somit nicht des INAP Protokolls bedarf, ist möglich.

Die Datenbank RNDB dient vor allem dem Umwerten von Fernsprechrufnummern aus der oben beschriebenen Untermenge von Fernsprechrufnummern.

Vorteilhafterweise sind den VOIP Dienstbetreibern OP1 bis OP3 jeweils eine Teilmenge der oben beschriebenen Untermenge von Fernsprechrufnummern fest zugeordnet. In diesem Fall wird somit der VOIP Dienstbetreiber direkt durch die Fernsprechrufnummer adressiert. Den VOIP Gateways, die einem bestimmten VOIP Dienstbetreiber zugeordnet sind, sind dann innerhalb des Kommunikationsnetzes TELENET die Fernsprechrufnummern der Teilmenge von Fernsprechrufnummern zugeordnet, die dem bestimmten VOIP Dienstbetreiber zugeordnet sind. Alle Fernsprechrufnummern einer Teilmenge von Fernsprechrufnummern adressieren innerhalb des Kommunikationsnetzes TELENET somit direkt ein VOIP Gateway, das demjenigen VOIP Dienstbetreiber zugeordnet ist, dem diese Teilmenge zugeordnet ist.

In der Datenbank RNDB sind ersten Fernsprechrufnummer aus dem Bereich von Fernsprechrufnummern, die einer Teilmenge eines ersten VOIP Dienstbetreiber zugeordnet sind, mit zweiten Fernsprechrufnummer aus dem Bereich von Fernsprechrufnummern verknüpft, die einer Teilmenge eines zweiten VOIP Dienstbetreiber zugeordnet ist, wenn das der gerufenen Fernsprechrufnummer zugeordnete IP Endgerät vom ersten zum zweiten VOIP Dienstbetreiber portiert ist. Weiter ist es auch möglich, daß in der Datenbank RNDB erste Rufnummern, die nicht Teil der oben beschriebenen Untermenge von Fernsprechrufnummern sind, mit Fernsprechrufnummern verknüpft sind, die der Teilmenge eines VOIP Dienstbetreiber zugeordnet sind, wenn ein der jeweiligen Fernsprechrufnummer zugeordnetes Endgerät von einem Netzbetreiber des Kommunikationsnetzes TELENET zu dem VOIP Dienstbetreiber portiert ist.

Durch diese Verknüpfung kann von der Steuereinheit CONTR1 die augenblicklich korrekte Fernsprechrufnummer eines IP Endgerätes und damit der augenblicklich korrekte VOIP Dienstbetreiber ermittelt werden, dem das IP Endgerät zugeordnet ist.

Es ist natürlich auch möglich, daß in der Datenbank RNDB die ersten Fernsprechrufnummern jeweils direkt mit einer Kennung desjenigen VOIP Dienstbetreiber verknüpft sind, dem das durch die Fernsprechrufnummer adressierte IP Endgerät augenblicklich zugeordnet ist.

Es ist weiter vorteilhaft, daß die ersten Fernsprechrufnummern in der Datenbank RNDB weiter jeweils mit der IP Adresse desjenigen IP Endgerätes verknüpft sind, dem die jeweilige Fernsprechrufnummer zugeordnet ist.

Die Managementeinheit NM der VOIP Dienstbetreiber greift auf die Datenbank RNDB zu und verwaltet dadurch den Server SERV. Durch Zugriff auf die Datenbank RNDB und durch Veränderung der in der Datenbank RNDB eingetragenen Daten ist es den VOIP Dienstbetreibern OP1 bis OP3 möglich, ihren Teilnehmern Fernsprechrufnummern zuzuordnen und die Wegeleitung von Fernsprechverbindungen an den Wechsel von Teilnehmern von einem ersten zu einem zweiten VOIP Dienstbetreiber anzupassen.

Die Steuereinheit CONTR1 weist eine Verwaltungseinheit MANG und mehrere Prozesse auf, von denen in Fig. 2 beispielhaft drei Prozesse P1 bis P3 gezeigt sind.

Die Verwaltungseinheit MANG ist für die Kommunikation der Prozesse P1 bis P3 mit der Schnittstelleneinheit INT1 und mit der Datenbank RNDB sowie für die Verwaltung dieser Prozesse zuständig.

Die Dienststeuereinheit CONTR1 wird für eine spezielle Fernsprechverbindung, beispielsweise für eine Fernsprechverbindung VCON getriggert, wenn der Server SERV über die Schnittstelleneinheit INT1 von einer der Komponenten SW1 bis SW3, beispielsweise von der Komponente SW3 kontaktiert wird, die der Dienststeuereinheit CONTR1 den Aufbau einer Fernsprechverbindung durch das Kommunikationsnetz TELENET anzeigt, die an eine Fernsprechrufnummer aus der oben beschriebenen Untermenge von Fernsprechnummern gerichtet ist.

Es ist auch möglich, daß die Dienststeuereinheit CONTR1 zusätzlich für eine spezielle Fernsprechverbindung getriggert wird, wenn der Server SERV) über die Schnittstelleneinheit INT1 von einer der Komponenten SW1 bis SW3 kontaktiert wird, die den Aufbau einer Fernsprechverbindung durch das Fernsprechnetz anzeigt, die an eine Fernsprechrufnummer gerichtet ist, deren zugeordnetes Endgerät zu einem VOIP Dienstbetreiber portiert ist.

Die Verwaltungseinheit MANG ermittelt, ob die oben genannten Bedingungen vorliegen und ob somit die Steuereinheit CONTR1 für eine Fernsprechverbindung des Kommunikationsnetzes TELENET zu triggern ist oder nicht. Sie erkennt das Vorliegen diese Bedingungen beispielsweise anhand der Art von Anforderungsnachrichten, mittels derer sie von den Komponenten SW1 bis SW3 kontaktiert wird. Weiter kann sie das Vorliegen dieser Bedingungen auch ermitteln, indem sie überprüft, ob die gerufenen Fernsprechrufnummer der oben beschriebenen Untermenge von Fernsprechrufnummern zugeordnet ist und durch Zugriff auf die Datenbank RNDB überprüft, ob zu die Fernsprechrufnummer zu einem VOIP Dienstbetreiber portiert ist.

Ist die Steuereinheit CONTR1 für eine Fernsprechverbindung des Kommunikationsnetzes TELENET zu triggern, so wird von der Verwaltungseinheit MANG ein Prozeß erzeugt, der dann die im Folgenden anhand des Prozesses P1 beschriebenen Funktionen für diese Fernsprechverbindung erbringt. Sind diese Funktionen für diese Fernsprechverbindung erbracht, so wir der zugeordnete Prozeß von der Verwaltungseinheit MANG gelöscht.

Die Prozesse P1 bis P3 stellen jeweils die Ausführung eines Computerprogramms dar. Die von ihnen durchgeführten Funktionen werden im Folgenden beispielhaft anhand des Prozesses P1 beschrieben:

Aufgrund einer speziellen Anforderungsnachricht von der Komponente SW3 wird die Steuereinheit CONTR1 für die Fernsprechverbindung VCON getriggert und von der Verwaltungseinheit MANG der Prozeß P1 für die Fernsprechverbindung VCON erzeugt. Der Prozeß P1 empfängt von der Komponente SW3 mit der speziellen Anforderungsnachricht eine Fernsprechrufnummer CN, die die gerufenen Fernsprechrufnummer der speziellen Fernsprechverbindung VCON darstellt. Alternativ fordert der Prozeß P1 diese Fernsprechrufnummer von der Komponente SW3 an. Aus der Fernsprechrufnummer CN ermittelt er sodann, welchem VOIP Dienstbetreiber das durch die gerufene Fernsprechrufnummer adressierte IP Endgerät zugeordnet ist. Sodann veranlaßt er eine Wegeleitung der speziellen Fernsprechverbindung VCON durch das Kommunikationsnetz TELENET zu einem dem ermittelten VOIP Dienstbetreiber zugeordneten VOIP Gateway.

Diese Funktion wird beispielsweise dadurch realisiert, daß mittels Zugriff auf die Datenbank RNDB ermittelt wird, ob die Fernsprechrufnummer CN in der Datenbank RNDB mit einer weiteren Fernsprechrufnummer aus dem Teilbereich eines (anderen) VOIP Dienstbetreibers verknüpft ist oder nicht.

Ist dies nicht der Fall, dann ist die Fernsprechverbindung bereits an ein VOIP Gateway adressiert, das dem VOIP Dienstbetreiber des adressierten IP Endgerätes zugeordnet ist. In diesem Fall wird von dem Prozeß nicht weiter in den Verbindungsaufbau der Fernsprechverbindung VCON durch das Kommunikationsnetz TELENET eingegriffen. Ist dies der Fall, ist die Fernsprechrufnummer CN somit beispielsweise mit einer Fernsprechrufnummer CN' verknüpft, so wird von dem Prozeß P1 eine Steuernachricht an die Komponente SW3 gesendet, die diese anweist, eine Umleitung der Fernsprechverbindung VCON zu der Fernsprechrufnummer CN' als gerufener Fernsprechrufnummer zu veranlassen. Dadurch wird eine Wegeleitung der Fernsprechverbindung zu einem dem anderen VOIP Netzbetreiber zugeordneten VOIP Gateway initiiert.

Diese Funktion kann auch beispielsweise dadurch realisiert werden, daß mittels Zugriff auf die Datenbank RNDB eine der Fernsprechrufnummer CN zugeordnete Betreiberkennung bestimmt wird. Der Prozeß P1 sendet sodann eine Steuernachricht an die Komponente SW3, die diese anweist, die Fernsprechverbindung VCON zu einem VOIP Gateway zu leiten, das durch diese Betreiberkennung im Kommunikationsnetz TELENET adressiert wird. Die Betreiberkennung kann hierbei beispielsweise innerhalb der Verbindungsanforderung als Prefix vor der Fernsprechrufnummer CN oder in einem separaten Feld der Verbindungsanforderung zur Adressierung der Fernsprechverbindung VCON innerhalb des Kommunikationsnetzes TELENET dienen.

Bei dem Zugriff auf die Datenbank wird weiter, vorteilhafterweise mittels eines Datenbankzugriffs, die der Fernsprechrufnummer CN der speziellen Fernsprechverbindung VCON zugeordnete IP Adresse ermittelt, beispielsweise eine IP Adresse IPA ermittelt. Die IP Adresse IPA wird in einer Steuernachricht an die Komponente SW3 gesendet und die Komponente SW3 durch die Steuernachricht angewiesen, die IP Adresse IPA während des Verbindungsaufbaus der Fernsprechverbindung VCON durch das Kommunikationsnetz TELENET zum adressierten VOIP Gateway, hier dem VOIP Gateway GW1, zu transportieren. Die IP Adresse IPA kann hierfür beispielsweise in die Verbindungsanforderung der Fernsprechverbindung VCON eingetragen werden und mit der Verbindungsanforderung transportiert werden. Weitere Möglichkeiten bestehen in dem Transport der IP Adresse IPA über einen Signalisierungskanal oder Nutzkanal des Kommunikationsnetzes TELENET zum Gateway GW1. Dieser Transport kann auch direkt von dem Server SERV aus zu dem Gateway GW1 erfolgen, wenn der Server SERV über einen entsprechenden Anschluß an das Kommunikationsnetz TELENET verfügt.

Die IP Adresse IPA wird von dem VOIP Gateway GW1 sodann dazu verwendet, die Fernsprechverbindung VCON weiter durch das Kommunikationsnetz IPNET zu dem gerufenen Endgerät, hier dem Endgerät TE3 aufzubauen.

Sind dem ermittelten VOIP Netzbetreiber mehrere räumlich verteilte VOIP Gateways zugeordnet, so ist es weiter vorteilhaft, daß der Prozeß P1 die Fernsprechverbindung VCON zu demjenigen VOIP Gateway des ermittelten VOIP Netzbetreibers leitet, das dem rufenden Fernsprechendgerät am nächsten liegt oder bei dem die im Kommunikationsnetz TELENET für die Fernsprechverbindung VCON anfallenden Gebühren am geringsten sind.

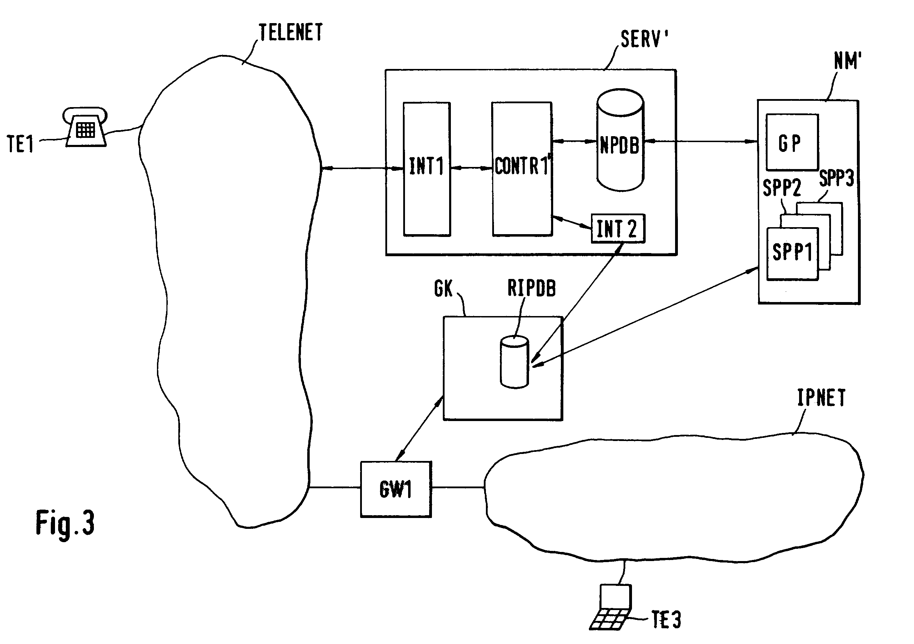

Anhand von Fig. 3 wird nun ein weiteres Ausführungsbeispiel der Erfindung beschrieben.

Fig. 3 zeigt die Kommunikationsnetz TELENET und IPNET, den Server SERV', die Managementeinheit NM', das VOIP Gateway GW1, den Gatekeeper GK und die Endgeräte TE1 und TE3.

Der Gatekeeper GK stellt einen Gatekeeper des Kommunikationsnetzes IPNET dar. Er weist eine Datenbank RIPDP auf. In diese Datenbank sind Fernsprechrufnummern mit IP Adressen verknüpft. Jeder einzelne VOIP Dienstanbieter kann für die Fernsprechrufnummern, die seinem Teilbereich von Fernsprechrufnummern zugeordnet sind, die mit diesen Fernsprechrufnummern in der Datenbank RIPDP verknüpften IP Adressen mittels Zugriff auf die Datenbank RIPDP frei festlegen.

Die Steuereinheit SERV' ist, bis auf folgende Unterschied, wie die Steuereinheit SERV nach Fig. 2 aufgebaut:

Die Datenbank RNDB ist durch eine Datenbank NPDB ersetzt. Die Datenbank NPDB ist wie die Datenbank RNDB nach Fig. 2 aufgebaut, mit dem Unterschied, daß Fernsprechrufnummern nicht mit IP Adressen verknüpft sind.

Die Steuereinheit CONTR1 ist durch eine Steuereinheit CONTR1' ersetzt, die bis auf folgenden Unterschied wie die Steuereinheit CONTR1 nach Fig. 2 aufgebaut ist:

Die Steuereinheit CONTR1' ermittelt zu einer gerufenen Fernsprechrufnummer, beispielsweise der Fernsprechrufnummer CN, die IP Adresse, die dasselbe IP Endgerät (TE3) wie die gerufene Fernsprechrufnummer adressiert, mittels Zugriff auf die Datenbank RIPDB des Gatekeepers GK. Dieser Datenbankzugriff erfolgt mittels der Schnittstelleneinheit INT2, die analog zur Schnittstelleneinheit INT1 eine Kommunikation zwischen dem Gatekeeper GK und dem Server SERV' ermöglicht. Diese Kommunikation erfolgt vorzugsweise über das Kommunikationsnetz IPNET.

Die Managementeinheit NM' erfüllt die Funktionen der Managementeinheit NM. Sie umfaßt funktionell mehrere Managementbereiche GP und SPP1 bis SPP3. Die Managementbereiche SPP1 bis SPP3 sind den VOIP Dienstbetreibern OP1, OP2 bzw. OP3 zugeordnet. Dem jeweiligen Dienstbetreiber ist es im Rahmen seines jeweiligen Managementbereichs jeweils möglich, die Verknüpfung von Fernsprechrufnummern seines Teilbereiches mit IP Adressen eigenständig durch Zugriff auf die Datenbank RIPDB zu steuern. Der Managementbereich GP steuert den Wechsel eines Teilnehmers von einem VOIP Dienstbetreiber zu einem anderen durch Zugriff auf die Datenbank NPDB. Dieser Managementbereich wird von einer zentralen Funktion wahrgenommen. Durch diese Aufteilung der Managementbereiche GP, SPP1 bis SPP3 wird eine effektive Verwaltung der Fernsprechrufnummern der Untermenge von Fernsprechrufnummern ermöglicht.

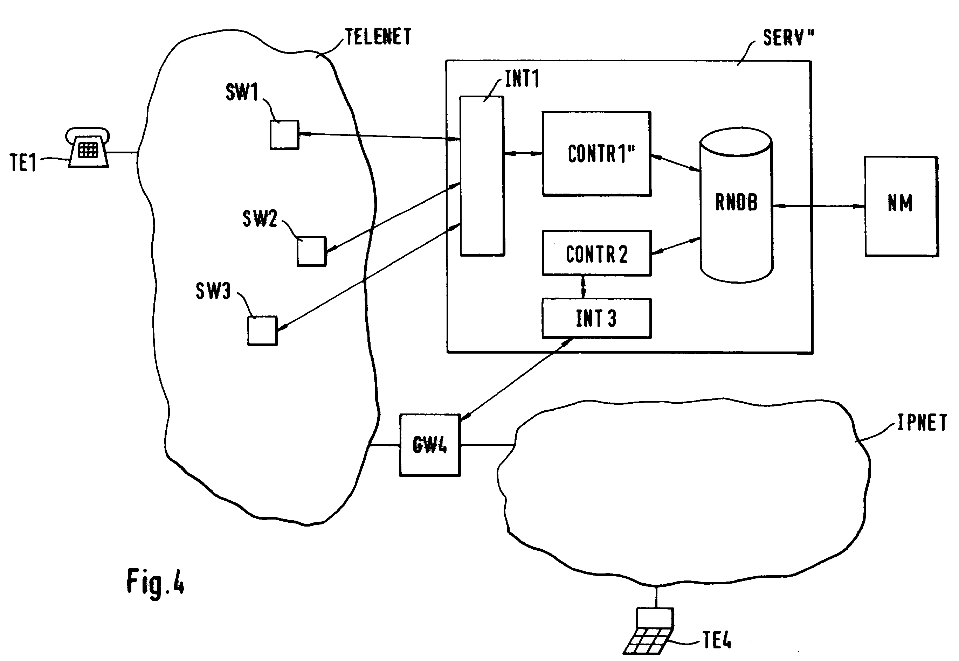

Anhand von Fig. 4 wird nun ein weiteres Ausführungsbeispiel der Erfindung beschrieben.

Fig. 4 zeigt die Kommunikationsnetz TELENET und IPNET, den Server SERV", die Managementeinheit NM, das VOIP Gateway GW4, die Komponenten SW1 bis SW3 und die Endgeräte TE1 und TE4.

Die Steuereinheit CONTR1 ist durch eine Steuereinheit CONTR1" ersetzt, die bis auf folgenden Unterschied wie die Steuereinheit CONTR1 nach Fig. 2 aufgebaut ist:

Die Steuereinheit CONTR1" ermittelt nicht die IP Adresse zu einer gerufenen Fernsprechrufnummer. Die Ermittlung einer IP Adresse zu einer Fernsprechrufnummer wird im Gegensatz zur Steuereinheit CONTR1 nach Fig. 2 von der Steuereinheit CONTR2 durchgeführt.

Die Steuereinheit CONTR2 greift einerseits ebenfalls auf die Datenbank RNDB zu und kommuniziert andererseits über eine Schnittstelleneinheit INT3 mit den VOIP Gateways GW1 bis GW5. Auf Anforderung von einem der VOIP Gateways GW1 bis GW5, beispielsweise des VOIP Gateways GW4, ermittelt die Steuereinheit CONTR2 eine IP Adresse zu einer gerufenen Fernsprechrufnummer, die dasselbe IP Endgerät wie die gerufene Fernsprechrufnummer adressiert. Die vom Server SERV" ermittelt IP Adresse wird somit auf eine Anforderung eines VOIP Gateways zu diesem VOIP Gateway transportiert. Die Steuereinheit CONTR2 beachtet hierbei bei der Ermittlung der IP Adresse, daß die gerufene Rufnummer der Fernsprechverbindung u. U. bereits von der Steuereinheit CONTR1" umgewertet worden ist.

Die Schnittstelleneinheit INT3 ist wie die Schnittstelleneinheit INT1 nach Fig. 2 aufgebaut. Die VOIP Gateways GW1 bis GW5 können zur Ermöglichung einer Kommunikation mit dem Server SERV hierbei über eine SSF Funktionalität (SSF = Service Switching Function) gemäß der IN Funktionalität verfügen. Weiter ist es natürlich möglich, daß der Server SERV mit den VOIP Gateways GW1 bis GW5 mittels der für die VOIP Gateway - Gatekeeper Kommunikation vorgesehen Kommunikationsmechanismen kommuniziert. Der Server kann somit im Rahmen dieser Kommunikation für die VOIP Gateways GW1 bis GW5 die Rolle eines Gatekeepers einnehmen.

Es ist vorteilhaft, daß der Server SERV" als ein Server des Kommunikationsnetzes IPNET ausgestaltet ist. Eine weitere vorteilhafte Ausgestaltung des Servers SERV" besteht darin, daß der Server funktionell in einen Gatekeeper des Kommunikationsnetzes IPNET integriert ist.

## Patentansprüche

1. Verfahren zur Unterstützung des Aufbaus von Fernsprechverbindungen (VCON) zwischen Fernsprechendgeräten (TE1, TE2) eines Fernsprechnetzes (TELENET) und IP Endgeräten (TE3, TE4) eines IP Netzes (IPNET), **dadurch gekennzeichnet**, daß zwei oder mehr VOIP Dienstbetreibern (OP1 bis OP3) eine Untermenge von Fernsprechrufnummern des Fernsprechnetzes (TELENET) zugeordnet werden und daß die VOIP Dienstbetreiber wiederum Fernsprechrufnummern aus der Untermenge von Fernsprechrufnummern IP Endgeräten (TE3, TE4) zuordnen, so daß das jeweilige IP Endgerät (TE3, TE4) zusätzlich zu einer diesem IP Endgerät zugeordneten IP-Adresse mittels dieser zugeordneten Fernsprechrufnummer adressierbar ist, daß für die Wegeleitung einer Fernsprechverbindung (VCON) durch das Fernsprechnetz (TELENET), die von einem Fernsprechendgeräte (TE1, TE2) des Fernsprechnetzes an eine Fernsprechrufnummer aus der Untermenge von Fernsprechrufnummern adressiert ist, ein Server (SERV, SERV', SERV") kontaktiert wird, daß der Server (SERV, SERV', SERV") aus der gerufenen Fernsprechrufnummer solch einer speziellen Fernsprechverbindung (VCON) ermittelt, welchem VOIP Dienstbetreiber das durch die gerufene Fernsprechrufnummer adressierte IP Endgerät zugeordnet ist, und daß der Server (SERV, SERV', SERV") eine Wegeleitung der speziellen Fernsprechverbindung (VCON) durch das Fernsprechnetz (TELENET) zu einem dem ermittelten VOIP Dienstbetreiber zugeordneten VOIP Gateway (GW1) veranlaßt.

2. Verfahren nach Anspruch 1, dadurch gekennzeichnet, daß den zwei oder mehr VOIP Dienstbetreibern (OP1 bis OP3) jeweils eine Teilmenge der Untermenge von Fernsprechrufnummern des Fernsprechnetzes fest zugeordnet wird, daß der Server (SERV, SERV', SERV") mittels einer Datenbank (RNDB, NPDB) eine gerufene erste Fernsprechrufnummer auf eine zweite Fernsprechrufnummer abbildet, die der Teilmenge eines der VOIP Dienstbetreiber zugeordnet ist, wenn das der gerufenen Fernsprechrufnummer zugeordnete Endgerät zu diesem VOIP Dienstbetreiber portiert ist, und daß der Server (SERV, SERV', SERV") eine Wegeleitung der speziellen Fernsprechverbindung mittels der zweiten Fernsprechrufnummer als gerufener Fernsprechrufnummer veranlaßt und damit eine Wegeleitung der speziellen Fernsprechverbindung (VCON) zu dem dem ermittelten VOIP Dienstbetreiber zugeordneten VOIP Gateway (GW1) veranlaßt.

3. Verfahren nach Anspruch 1, dadurch gekennzeichnet, daß der Server (SERV, SERV', SERV") weiter die der gerufenen Fernsprechrufnummer der speziellen Fernsprechverbindung (VCON) zugeordnete IP Adresse ermittelt.

4. Verfahren nach Anspruch 3, dadurch gekennzeichnet, daß die IP Adresse vom Server (SERV, SERV') bei dessen Kontaktierung ermittelt wird und während des Verbindungsaufbaus durch das Fernsprechnetz zum VOIP Gateway transportiert wird.

5. Verfahren nach Anspruch 3, dadurch gekennzeichnet, daß die vom Server (SERV, SERV') ermittelt IP Adresse auf eine Anforderung des VOIP Gateways zum VOIP Gateway transportiert wird.

6. Verfahren nach Anspruch 1, dadurch gekennzeichnet, daß der Server von einer Managementeinheit (NM, NM') der VOIP Dienstbetreiber verwaltet wird.

7. Server (SERV, SERV', SERV") zur Unterstützung des Aufbaus von Fernsprechverbindungen (VCON) zwischen Fernsprechendgeräten (TE1, TE2) eines Fernsprechnetzes (TELENET) und IP Endgeräten (TE3, TE4) eines IP Netzes (IPNET),
**dadurch gekennzeichnet**, daß der Server (SERV, SERV', SERV") mit einer Schnittstelleneinheit (INT1) zur Kommunikation mit ein oder mehreren Komponenten (SW1 bis SW3) des Fernsprechnetzes (TELENET) versehen ist, daß der Server (SERV, SERV', SERV") mit einer Steuereinheit (CONTR1, CONTR1', CONTR1") versehen ist, die so ausgestaltet ist, daß sie für eine spezielle Fernsprechverbindung (VCON) getriggert wird, wenn der Server (SERV, SERV', SERV") über die Schnittstelleneinheit (INT1) von einer Komponente (SW3) des Fernsprechnetz kontaktiert wird, die den Aufbau einer Fernsprechverbindung (VCON) durch das Fernsprechnetz anzeigt, die an eine Fernsprechrufnummer aus einer Untermenge von Fernsprechnummern gerichtet ist, die zwei oder mehr VOIP Dienstbetreibern (OP1 bis OP3) derart zur Zuordnung zu IP Endgeräten zugeordnet sind, daß das jeweilige IP Endgerät zusätzlich zu einer diesem IP Endgerät zugeordneten IP-Adresse mittels dieser zugeordneten Fernsprechrufnummer adressierbar ist, daß die Steuereinheit (CONTR1, CONTR1', CONTR1") weiter so ausgestaltet ist, daß sie, wenn sie für die spezielle Fernsprechverbindung (VCON) getriggert ist, aus der gerufenen Fernsprechrufnummer der speziellen Fernsprechverbindung ermittelt, welchem VOIP Dienstbetreiber das durch die gerufene Fernsprechrufnummer adressierte IP Endgerät zugeordnet ist und eine Wegeleitung der speziellen Fernsprechverbindung (VCON) durch das Fernsprechnetz (TELENET) zu einem dem ermittelten VOIP Dienstbetreiber zugeordneten VOIP Gateway (GW1) veranlaßt.

8. Server (SERV, SERV") nach Anspruch 7, dadurch gekennzeichnet, daß die Steuereinheit (CONTR1, CONTR1', CONTR1") weiter so ausgestaltet ist, daß sie zusätzlich für eine spezielle Fernsprechverbindung (VCON) getriggert wird, wenn der Server (SERV, SERV', SERV") über die Schnittstelleneinheit (INT1) von einer Komponente (SW3) des Fernsprechnetz kontaktiert wird, die den Aufbau einer Fernsprechverbindung durch das Fernsprechnetz anzeigt, die an eine Fernsprechrufnummer gerichtet ist, deren zugeordnetes Endgerät zu einem VOIP Dienstbetreiber portiert ist.

9. Server (SERV, SERV") nach Anspruch 7, dadurch gekennzeichnet, daß der Server (SERV, SERV") weiter mit einer Datenbank (RNDB) versehen ist, die einer erste Fernsprechrufnummer, die einem ersten der VOIP Dienstbetreiber zugeordnet ist, mit einer IP Adresse und, wenn das der gerufenen Fernsprechrufnummer zugeordnete IP Endgerät vom ersten zum zweiten VOIP Dienstbetreiber portiert ist, mit einer zweiten Fernsprechrufnummer verknüpft, die einem zweiten der VOIP Dienstbetreiber zugeordnet ist.

10. Server (SERV') nach Anspruch 7, dadurch gekennzeichnet, daß die Steuereinheit (CONTR1') weiter so ausgestaltet ist, daß sie mittels Zugriff auf eine Datenbank (RIPDB) eines Gatekeepers (GK) des IP Netzes (IPNET) zu der gerufenen Fernsprechrufnummer eine IP Adresse ermittelt, die dasselbe IP Endgerät (TE3) wie die gerufene Fernsprechrufnummer adressiert.

11. Server nach Anspruch 7, dadurch gekennzeichnet, daß der Server als Server des IP Netzes ausgestaltet ist.

12. Server nach Anspruch 7, dadurch gekennzeichnet, daß der Server funktionell in einen Gatekeeper des IP Netzes integriert ist.

13. Computer Produkt (CP) zur Unterstützung des Aufbaus von Fernsprechverbindungen (VCON) zwischen Fernsprechendgeräten (TE1, TE2) eines Fernsprechnetzes (TELENET) und IP Endgeräten (TE3, TE4) eines IP Netzes (IPNET),
**dadurch gekennzeichnet**, daß das Computer Produkt (CP) so ausgestaltet ist, daß es in Verbindung mit einem Computer (SP) eine Steuereinheit (CONTR1, CONTR1', CONTR1") bereitstellt, die so ausgestaltet ist, daß sie für eine spezielle Fernsprechverbindung (VCON) getriggert wird, wenn sie von einer Komponente (SW3) des Fernsprechnetz kontaktiert wird, die den Aufbau einer Fernsprechverbindung (VCON) durch das Fernsprechnetz erkennt, die an eine Fernsprechrufnummer aus einer Untermenge von Fernsprechnummern gerichtet ist, die zwei oder mehr VOIP Dienstbetreibern (OP1 bis OP3) derart zur Zuordnung zu IP Endgeräten zugeordnet sind, daß das jeweilige IP Endgerät zusätzlich zu einer diesem IP Endgerät zugeordneten IP-Adresse mittels dieser zugeordneten Fernsprechrufnummer adressierbar ist, und die weiter so ausgestaltet ist, daß sie, wenn sie für die spezielle Fernsprechverbindung (VCON) getriggert ist, aus der gerufenen Fernsprechrufnummer der speziellen Fernsprechverbindung ermittelt, welchem VOIP Dienstbetreiber das durch die gerufene Fernsprechrufnummer adressierte IP Endgerät zugeordnet ist und eine Wegeleitung der speziellen Fernsprechverbindung (VCON) durch das Fernsprechnetz (TELENET) zu einem dem ermittelten VOIP Dienstbetreiber zugeordneten VOIP Gateway (GW1) veranlaßt.
